# EUROPÄISCHE PATENTSCHRIFT

(11) **EP 2 521 944 B1**
(45) Veröffentlichungstag und Bekanntmachung des Hinweises auf die Patenterteilung: **14.10.2015**
(21) Anmeldenummer: 12709504.0
(22) Anmeldetag: 23.01.2012
(51) Int. Cl.: G05B 19/418

(54) **FLEXIBLE FERTIGUNGSZELLE**
FLEXIBLE PRODUCTION CELL
CELLULE DE FABRICATION FLEXIBLE

(30) Priorität: 10.02.2011 DE 102011010944
(43) Veröffentlichungstag der Anmeldung: 14.11.2012
(73) Patentinhaber: Fibro Laepple Technology GmbH, 74851 Hassmersheim (DE)
(72) Erfinder: SCHUPP, Manfred, 74172 Neckarsulm (DE); THULLNER, Karl-Heinz, 74182 Obersulm (DE); HUEFTLE, Egon, 71543 Wuestenrot (DE); KLENK, Fritz, 74078 Heilbronn (DE)
(74) Vertreter: Sperling, Rüdiger
(86) Internationale Anmeldenummer: PCT/DE2012/200003
(87) Internationale Veröffentlichungsnummer: WO 2012/107038

(56) Entgegenhaltungen:
- WO-A1-2005/076093
- WO-A2-2008/135371
- DE-A1-102009 031 018

## Beschreibung

Die Erfindung betrifft eine flexible Fertigungszelle zur Herstellung von Formteilen, insbesondere aus Metall, vorzugsweise in Leichtbauweise, u. a. für den Karosseriebau.

Unter einer flexiblen Fertigungszelle versteht man üblicherweise eine Bearbeitungsmaschine, die auf Grundlage einer CNC-Steuerung Werkstücke positioniert und deren Teil- oder Komplettbearbeitung übernimmt. Bei Bedarf findet ein automatischer Werkzeugwechsel statt. Im Konkreten kann die Fertigungszelle aus drei Komponenten bestehen, nämlich einem Bearbeitungssystem, einem Materialflusssystem und einem Informationssystem. Charakteristisch für eine flexible Fertigungszelle ist bislang, dass die Bearbeitung der Werkstücke an nur einer Maschine erfolgt und dass die Werkstücke auf Grund des Materialflusssystems vollautomatisiert vom Werkstückspeicher zur Maschine gelangen. Werden mehrere flexible Fertigungszellen miteinander kombiniert, spricht man von einem flexiblen Fertigungssystem.

Im vorliegenden Falle dient die flexible Fertigungszelle zur Herstellung beliebiger Formteile. Es kann sich dabei beispielweise um die Fertigung von Formteilen für Fahrzeugkarosserien handeln. So lassen sich über solche flexiblen Fertigungszellen Innenbleche, Heckklappen, Kotflügel etc von Kraftfahrzeugen fertigen. Die Bauteile können aus Stahl bzw. im Rahmen der Leichbauweise aus Aluminium bestehen. Es kann sich dabei sowohl um Teile für die Serienfertigung als auch um Ersatzteile handeln.

Der aus der Praxis bekannte Stand der Technik betrifft Fertigungszellen, die zur Herstellung bestimmter Formteile eingerichtet und entsprechend betrieben werden. Das Umrüsten ist mühsam und zeitaufwendig. Kleine Losgrößen lassen sich mit solchen Fertigungszellen kaum herstellen, nämlich in Ermangelung einer hinreichenden Flexibilität in Bezug auf unterschiedliche Formteile. Jedenfalls ist der Rüstaufwand erheblich.

Das Dokument DE 10 2009 031 018 A1 offenbart eine modulare Bearbeitungsanlage und Verfahren zur Montage, Herstellung, Bearbeitung und Analyse. Das Dokument definiert flexible Fertigungszellen mit Hilfe von Fertigungsebenen und Funktionsspalten, die geographisch angeordnet sind.

Der vorliegenden Erfindung liegt daher die Aufgabe zu Grunde, eine flexible Fertigungszelle der gattungsbildenden Art anzugeben, wonach insbesondere auch Kleinserien von Formteilen herstellbar sind. Somit soll sich die Fertigungszelle insbesondere auch zur Herstellung von Ersatzteilen im Karosseriebau eignen. Das Umrüsten soll einfach und so schnell wie möglich bei geringem Personalbedarf möglich sein. Insgesamt ist eine hohe Flexibilität bei unterschiedlichsten Stückzahlen angestrebt. Voranstehende Aufgabe ist durch die Merkmale des Patentanspruchs 1 gelöst. Da-nach umfasst eine flexible Fertigungszelle der gattungsbildenden Art mehrere Fertigungsebenen, die mit unterschiedlichen Fertigungseinrichtungen ausgestattet sind. Zur Definition des gesamten Fertigungsprozesses für ein bestimmtes Formteil sind die Fertigungseinrichtungen der Fertigungsebenen austauschbar, wobei sich die Funktion einer Fertigungsebene durch die dort befindlichen und aktivierten Fertigungseinrichtungen ergibt und wobei eine übergeordnete Steuerung für die gesamte Fertigungszelle vorgesehen ist.

An dieser Stelle sei angemerkt, dass der Begriff "Fertigungseinrichtung" im weitesten Sinne zu verstehen ist. So fallen darunter nicht nur die Prozesstechnik nebst Aufnahmetechnik, sondern auch das Handling, Sicherheitsbereiche und Lagerplätze. Im Detail wird darauf später noch eingegangen werden.

Erfindungsgemäß ist erkannt worden, dass es gerade zur Begünstigung der Flexibilität von Vorteil ist, wenn mehrere Fertigungsebenen mit unterschiedlichen Fertigungseinrichtungen ausgestattet sind, wobei ein Austausch der Fertigungseinrichtungen - in den jeweiligen Ebenen - möglich ist. Entsprechend der Ausstattung einer jeden Ebene ergibt sich die Funktion, nämlich durch die dort jeweils aktivierten Fertigungseinrichtungen. Die übergeordnete Steuerung steuert nicht nur die eigentliche Funktion der jeweiligen Fertigungseinrichtungen und somit der jeweiligen Fertigungsebenen, sondern vielmehr auch den Austausch bzw. das Umrüsten in den Fertigungsebenen. Somit ist ein vollautomatischer Betrieb der so definierten flexiblen Fertigungszelle möglich.

Vorteilhafterweise können beliebig viele - auch unterschiedliche - Fertigungsebenen mit gleichen oder unterschiedlichen Fertigungseinrichtungen untereinander verkettet oder kombiniert werden, je nach zu fertigenden Formteilen. Beliebige Anpassungen sind möglich. Ebenso ist es denkbar, dass die Fertigungsebenen untereinander austauschbar und/oder beliebig miteinander verkettbar sind, ebenfalls entsprechend dem zu fertigenden Formteil. Eine optimale Flexibilität der Fertigungszelle ist gewährleistet.

In weiter vorteilhafter Weise werden die Fertigungseinrichtungen der einzelnen Fertigungsebenen über Hilfsmittel, vorzugsweise mittels Stapler, ausgetauscht. Beliebige Manipulatoren bzw. Roboter können zum Einsatz kommen.

In ganz besonders vorteilhafter Weise sind die Fertigungseinrichtungen automatisch austauschbar, vorzugsweise über die übergeordnete Steuerung gesteuert. Dadurch ist ein automatischer Betrieb abermals begünstigt.

Wie bereits zuvor erwähnt, können mehrere Fertigungsebenen vorgesehen sein, wobei übliche Formteile die Vorkehrungen von drei bis sechs Fertigungsebenen benötigen, vorzugsweise fünf Fertigungsebenen.

Bei der Vorkehrung von fünf oder sechs Fertigungsebenen können diese wie folgt ausgestattet bzw. funktional definiert sein:
Eine erste Ebene kann die Prozesstechnik und Überwachungseinheiten für die Prozesstechnik umfassen. Bei der Prozesstechnik kann es sich um das Fügen, beispielsweise durch Punktschweißen, Clinchen, Stanznieten, Kleben, Prägen, Rollfalzen, etc. handeln. Ebenso ist ein Handling der Formteile vorgesehen. Des Weiteren kann die erste Ebene eine Kameraüberwachung oder sonstige Hilfseinrichtungen umfassen, um nämlich einerseits den Fertigungsprozess durchzuführen und andererseits diesen zu überwachen.

In einer zweiten Ebene können das Roboterhandling und Verfahrbereiche vorgesehen sein, um nämlich die in der ersten Ebene gefertigten Formteile zu handhaben und zu transportieren.

Die dritte Ebene kann spezifische Aufnahmetechniken umfassen. Genauer gesagt handelt es sich hier um die spezifische Aufnahmetechnik der jeweiligen Bau- bzw. Formteile, wobei die Aufnahmetechnik bei einem Typwechsel gewechselt und auf besonderen Lagerplätzen, beispielsweise in der fünften Ebene, abgestellt wird. Die Fertigung erfolgt üblicherweise in Losgrößen. Danach folgt der Rüstvorgang.

In der vierten Ebene können allgemeine Sicherheitseinrichtungen vorgesehen sein. Dazu zählen Schutzzäune, Rolltore, Scanner, etc. Jedwede die Sicherheit begünstigenden Vorkehrungen lassen sich dort integrieren.

Die fünfte Ebene dient zur Bereitstellung von Lagerplätzen bzw. Lagerraum insbesondere zur Zwischenlagerung. Üblicherweise werden hier bauteilspezifische Einrichtungen zwischengelagert.

Die sechste Ebene kann optional vorgesehen sein und dabei einen automatisierten Wechselbereich definieren. Dieser Wechselbereich lässt sich für die spezifische Aufnahmetechnik automatisieren, wonach die jeweiligen Vorrichtungen bzw. Fertigungseinrichtungen mit automatisierten Fördersystemen gewechselt werden. Der Einsatz von Werkem und Gabelstaplern lässt sich dadurch minimieren.

An dieser Stelle noch einmal hervorgehoben, dass die flexible Fertigungszelle mit einer übergeordneten Gesamtsteuerung ausgestattet ist. Mit dieser Gesamtsteuerung wird die komplette Anlage gesteuert, d. h. die Funktion der einzelnen Ebenen und deren Wechselwirkung.

Die flexible Fertigungszelle hat außerdem den enormen Vorteil, dass sie sich mit gebrauchten Anlagenkomponenten als Fertigungseinrichtungen in den jeweiligen Fertigungsebenen ausstatten lässt, so dass es möglich ist, ausgehend von einer ursprünglich starren Fertigung deren Anlagenkomponenten zum Aufbau der flexiblen Fertigungszelle zu nutzen. Dies begünstigt die Kosten einer solchen Fertigungszelle ganz erheblich.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.
In der Zeichnung zeigen
- Fig. 1: in einer schematischen Ansicht den grundsätzlichen Aufbau und das Zusammenwirken eines Ausführungsbeispiels einer erfindungsgemäßen flexiblen Fertigungszelle mit insgesamt fünf Fertigungsebenen und
- Fig. 2: in einer schematischen Ansicht den grundsätzlichen Aufbau und das Zusammenwirken eines zweiten Ausführungsbeispiels einer erfindungsgemäßen flexiblen Fertigungszelle mit insgesamt sechs Fertigungsebenen.

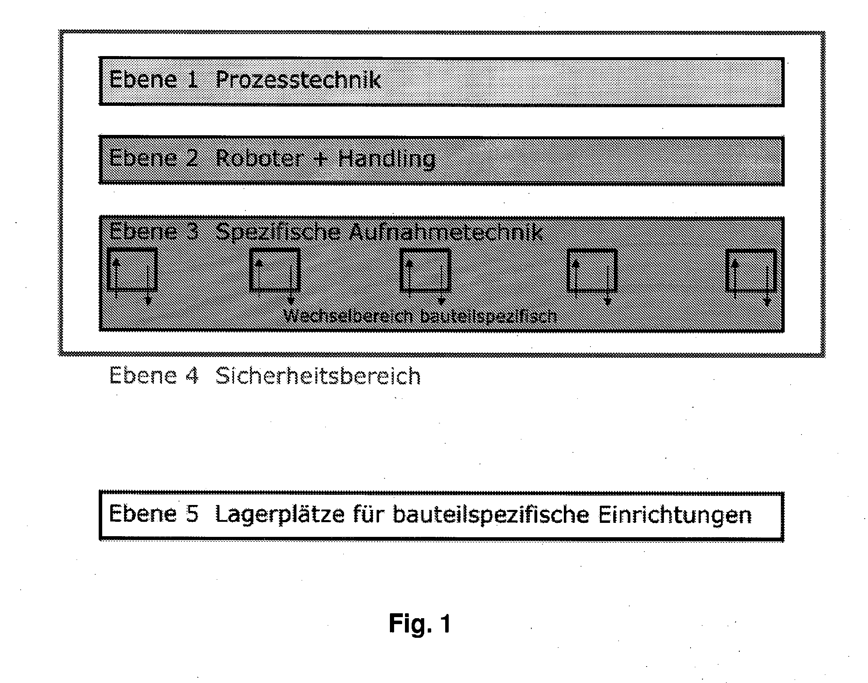

Gemäß der Darstellung in Fig. 1 umfasst die erste Fertigungsebene - Ebene 1 - die Prozesstechnik, beispielsweise die Schweiß- oder Klebetechnik.

In der zweiten Ebene - Ebene 2 - sind Roboter zum Handling der Formteile vorgesehen.

Die dritte Fertigungsebene - Ebene 3 - umfasst eine spezifische Aufnahmetechnik für die Formteile, wobei ein bauteilspezifischer Wechsel vorgesehen ist. Eine Abstimmung auf die jeweiligen Formteile ist jeweils realisiert.

Die vierte Ebene - Ebene 4 - umgibt symbolisch die ersten drei Fertigungsebenen und ist als Sicherheitsbereich in Form von Zäunen, Absperrungen, etc. zu verstehen.

Eine fünfte Fertigungsebene - Ebene 5 - umfasst Lagerplätze für bauteilspezifische Einrichtungen, beispielsweise für die aus- bzw. einzuwechselnde Aufnahmetechnik.

Die Verkettung mehrerer Fertigungszellen entsprechend den voranstehenden Ausführungen ist möglich.

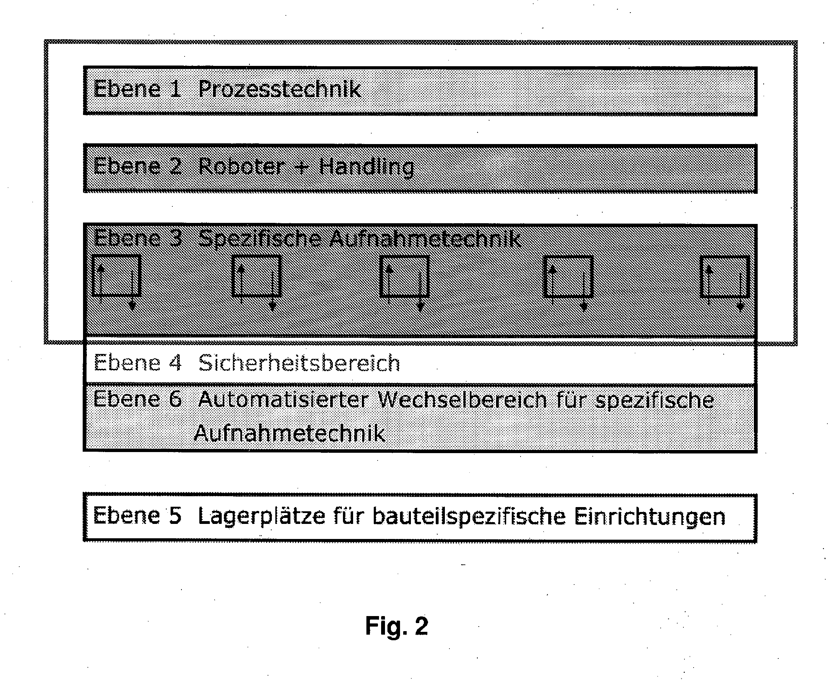

Fig. 2 zeigt ein weiteres Ausführungsbeispiel einer flexiblen Fertigungszelle, wobei dort insgesamt sechs Fertigungsebenen vorgesehen sind. In Ergänzung zu den in Fig. 1 beschriebenen Fertigungsebenen ist hier eine sechste Fertigungsebene - Ebene 6 - vorgesehen, die einen automatisierten Wechselbereich für die spezifische Aufnahmetechnik aus der dritten Fertigungsebene umfasst. Letztendlich kann die sechste Fertigungsebene zum Transfer der Aufnahmetechnik aus Fertigungsebene 3 in die Lagerplätze der Fertigungsebene 5 und umgekehrt dienen. Durch Vorkehrung der Ebene 6 ist ein automatisierter Wechsel zur Herstellung anderer Formteile möglich, beispielsweise ein Wechsel von einer Kraftfahrzeugtür zur einer Kraftfahrzeugheckklappe.

Erfindungsgemäße flexible Fertigungszellen gemäß den voranstehenden Ausführungen eignen sich sowohl zur Herstellung von Serienteilen als auch zur Herstellung von Ersatzteilen.

In vorteilhafter Weise sind in einer Fertigungszelle mehrere Prozesse möglich, beispielsweise Punktschweißen, Kleben, Clinchen, das Bauteilhandling, Docking, Rollfalzen, Gelieren, etc. Unterschiedliche Ausbaustufen sind realisierbar.

Zudem lassen sich sogenannten Reuse-Komponenten und beliebige Elemente aus der Anlagentechnik integrieren.

Das Betreiben der erfindungsgemäßen flexiblen Fertigungszelle erfordert einen nur geringen Personalbedarf. Es lassen sich kürzeste Durchlaufzeiten bei geringen Beständen realisieren. Eine hohe Betriebsmittelnutzung ist möglich. Bezüglich unterschiedlicher Teilegeometrien und unterschiedlicher Stückzahlen liefert die erfindungsgemäße flexible Fertigungszelle ein hohes Maß an Flexibilität.

Geringe Umrüstzeiten sind ein weiterer Vorteil. Auf Grund der Flexibilität ist die hier in Rede stehende flexible Fertigungszelle, insbesondere in Bezug auf die Ebene der Prozesstechnik, aluminium- und stahltauglich. Die Fertigungszelle lässt sich jedenfalls dahingehend beliebig rüsten.

Der übergeordneten Steuerung kommt eine ganz besondere Funktion zu, da diese zentral alle Fertigungsebenen steuert und nicht nur den Materialfluss. Auch das automatisierte Wechseln der spezifischen Aufnahmetechnik wird zentral gesteuert, so dass ein schnellstmögliches - automatisches - Umrüsten möglich ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

## Patentansprüche

1. Flexible Fertigungszelle zur Herstellung von Formteilen mit mehreren Fertigungsebenen, die mit unterschiedlichen Fertigungseinrichtungen ausgestattet sind, wobei die Fertigungseinrichtungen der Fertigungsebenen austauschbar sind und jede Fertigungsebene eine eigene Funktionsebene darstellt, deren Funktion sich durch die dort aktivierten Fertigungseinrichtungen ergibt und in einer ersten Fertigungsebene die gesamte Prozesstechnik untergebracht ist, während in einer davon getrennten weiteren Fertigungsebene die spezifische Aufnahmetechnik vorgesehen ist und in einer zwischen diesen beiden Fertigungsebenen angeordneten Funktionsebene eine Funktionsebene mit einem Roboterhandling vorgesehen ist und wobei eine übergeordnete Steuerung für die gesamte Fertigungszelle vorgesehen ist und die Funktionen der einzelnen Ebenen und deren Wechselwirkung steuert.

2. Fertigungszelle nach Anspruch 1, **dadurch gekennzeichnet, dass** beliebig viele Fertigungsebenen mit gleichen oder unterschiedlichen Fertigungseinrichtungen miteinander verkettbar bzw. kombinierbar sind.

3. Fertigungszelle nach Anspruch 1 oder 2, **dadurch gekennzeichnet, dass** die Fertigungsebenen untereinander austauschbar und/oder beliebig miteinander verkettbar sind.

4. Fertigungszelle nach einem der Ansprüche 1 bis 3, **dadurch gekennzeichnet, dass** die Fertigungseinrichtungen der Fertigungsebenen über Hilfsmittel, vorzugsweise mittels Stapler, austauschbar sind.

5. Fertigungszelle nach einem der Ansprüche 1 bis 4, **dadurch gekennzeichnet, dass** die Fertigungseinrichtungen automatisch austauschbar sind.

6. Fertigungszelle nach einem der Ansprüche 1 bis 5, **dadurch gekennzeichnet, dass** 3 bis 7 Fertigungsebenen, vorzugsweise 5 oder 6 Fertigungsebenen, vorgesehen sind.

7. Fertigungszelle nach einem der Ansprüche 1 bis 6, **dadurch gekennzeichnet, dass** eine erste Ebene die Prozesstechnik und Überwachungseinheiten für die Prozesstechnik umfasst.

8. Fertigungszelle nach einem der Ansprüche 1 bis 7, **dadurch gekennzeichnet, dass** eine zweite Ebene das Roboterhandling und Verfahrbereiche umfasst.

9. Fertigungszelle nach einem der Ansprüche 1 bis 8, **dadurch gekennzeichnet, dass** eine dritte Ebene spezifische Aufnahmetechniken für die Bauteile umfasst.

10. Fertigungszelle nach einem der Ansprüche 1 bis 9, **dadurch gekennzeichnet, dass** eine vierte Ebene allgemeine Sicherheitseinrichtungen umfasst.

11. Fertigungszelle nach einem der Ansprüche 1 bis 10, **dadurch gekennzeichnet, dass** eine 5. Ebene Lagerplätze bzw. Lagerraum zur Zwischenlagerung umfasst.

12. Fertigungszelle nach einem der Ansprüche 1 bis 11, **dadurch gekennzeichnet, dass** eine 6. Ebene einen vorzugsweise automatisierten Wechselbereich für die spezifische Aufnahmetechnik, insbesondere automatisierte Fördersysteme, umfasst.

13. Fertigungszelle nach einem der Ansprüche 1 bis 12, **dadurch gekennzeichnet, dass** die Fertigungsebenen zumindest teilweise mit gebrauchten Fertigungseinrichtungen aus ehemals starren Fertigungskonzepten ausgestattet sind.

## Claims

1. Flexible manufacturing cell for the production of formed components having several production levels, which are equipped with various production facilities, the production facilities of the production levels are interchangeable and each production level represents a separate functional level, the function of which results from the activated production facilities of this production level and a first manufacturing level comprises the entire process technique while reside in a separate additional production level, the specific holding technology is provided and in a production level arranged between these two functional levels a functional level is provided with a robot handling and wherein a subordinate controller for the entire manufacturing cell is provided, which controls the functions of the different levels and their interaction.

2. Manufacturing cell according to claim 1, **characterized in that** any number of production levels with the same or different production facilities are linked or linkable combined.

3. Manufacturing cell according to claim 1 or 2, **characterized in that** the production levels are interchangeable and / or linkable with another.

4. Manufacturing cell according to any one of claims 1 to 3, **characterized in that** the production facilities of the production levels are interchangeable by means of auxiliaries, preferably by means of a forklift.

5. Manufacturing cell according to any one of claims 1 to 4, **characterized in that** the production facilities are automatically interchangeable.

6. Manufacturing cell according to any one of claims 1 to 5, **characterized in that** 3 to 7 production levels, preferably 5 or 6 production levels, are provided.

7. Manufacturing cell according to any one of claims 1 to 6, **characterized in that** a first level includes the process technique and monitoring units for the process technique.

8. Manufacturing cell according to any one of claims 1 to 7, **characterized in that** a second level includes the robot handling and movement regions.

9. Manufacturing cell according to any one of claims 1 to 8, **characterized in that** a third level includes specific holding techniques for the components.

10. Manufacturing cell according to any one of claims 1 to 9, **characterized in that** a fourth level includes general safety devices.

11. Manufacturing cell according to any one of claims 1 to 10, **characterized in that** a fifth level includes storage places or storage space for temporary storage.

12. Manufacturing cell according to any one of claims 1 to 11, **characterized in that** a sixth plane comprises preferably a changing area for automatically changing the specific holding technology, in particular automated conveyor systems.

13. Manufacturing cell according to one of claims 1 to 12, **characterized in that** the production levels are at least partially equipped with manufacturing equipment used in formerly fixed arranged manufacturing concepts.

## Revendications

1. Cellule de fabrication flexible pour la production de composants formés ayant plusieurs niveaux de production, qui sont équipés de différents sites de production, les installations dans chaque niveaux de production sont interchangeables et chaque niveau de production représente un niveau fonctionnel distinct, dont la fonction résulte d'installation de production activé de ce niveau de production et un premier niveau de production comprend la technique de processus entièrement tandis que dans un niveau de production supplémentaire et séparée la technologie de fixation spécifique est fourni et à un niveau de production disposée entre ces deux niveaux fonctionnels est pourvue d'une manipulation de robot et dans lequel un dispositif de commande subordonné est prévu pour l'ensemble de cellule de fabrication, qui commande les fonctions des différents niveaux et leur interaction.

2. Cellule de fabrication selon la revendication 1, **caractérisé en ce que** tout nombre de niveaux de production avec les installations de production identiques ou différentes sont combinés ou combinables entre eux.

3. Cellule de fabrication selon la revendication 1 ou 2, **caractérisé en ce que** les niveaux de production sont interchangeables et / ou combinables entre eux.

4. Cellule de fabrication selon l'une quelconque des revendications 1 à 3, **caractérisé en ce que** les installations des niveaux de production sont interchangeables au moyen d'adjuvants, de préférence au moyen d'un chariot élévateur.

5. Cellule de fabrication selon l'une quelconque des revendications 1 à 4, **caractérisé en ce que** les installations de production sont automatiquement interchangeables.

6. Cellule de fabrication selon l'une quelconque des revendications 1 à 5, **caractérisé en ce que** 3 à 7 niveaux de production, de préférence 5 ou 6 niveaux de production, sont fournis.

7. Cellule de fabrication selon l'une quelconque des revendications 1 à 6, **caractérisé en ce qu'**un premier niveau comprend la technique de processus et de surveillance pour l'unité technique de procédé.

8. Cellule de fabrication selon l'une quelconque des revendications 1 à 7, **caractérisé en ce qu'**un deuxième niveau comprend les régions de manipulation et de déplacement du robot.

9. Cellule de fabrication selon l'une quelconque des revendications 1 à 8, **caractérisé en ce qu'**un troisième niveau comprend des techniques de fixation spécifiques pour les composants.

10. Cellule de fabrication selon l'une quelconque des revendications 1 à 9, **caractérisé en ce qu'**un quatrième niveau comporte des dispositifs de sécurité générale.

11. Cellule de fabrication selon l'une quelconque des revendications 1 à 10, **caractérisé en ce qu'**un cinquième niveau comprend des lieux de stockage ou d'espace de stockage pour le stockage temporaire.

12. Cellule de fabrication selon l'une quelconque des revendications 1 à 11, **caractérisé en ce qu'**un sixième niveau comprend de préférence une zone de modification pour modifier automatiquement la technologie spécifique de maintien, en particulier des systèmes de convoyage automatisés.

13. Cellule de fabrication selon l'une des revendications 1 à 12, **caractérisé en ce que** les niveaux de production sont au moins partiellement équipés de matériel de fabrication utilisé auparavant dans la fabrication de concepts disposés fixes.
